# EUROPEAN PATENT APPLICATION

(11) **EP 4 564 549 A1**
(43) Date of publication of application: **04.06.2025**
(21) Application number: 23846029.9
(22) Date of filing: 07.06.2023
(51) Int. Cl.: H01M 50/152, H01M 10/04, H01M 50/103, H01M 50/119, H01M 50/124, H01M 50/184, H01M 50/209, H01M 50/528, H01M 50/531, H01M 50/545, H01M 50/548

(54) **PRISMATIC BATTERY AND BATTERY PACK USING SAME**

(30) Priority: 25.07.2022 JP 2022118045
(71) Applicant: Panasonic Intellectual Property Management Co., Ltd., Kadoma-shi, Osaka 571-0057 (JP)
(72) Inventor: FUJIMOTO, Masahisa, Kadoma-shi, Osaka 571-0057 (JP)
(74) Representative: Novagraaf International SA
(86) International application number: PCT/JP2023/021259
(87) International publication number: WO 2024/024293

(57) **Abstract**

A prismatic battery according to the present disclosure includes: a metal container 10; a sealing member 30 including an insulating packing 32 in contact with the container 10; and an electrode group 20 housed in the container 10, wherein the container 10 includes a prismatic body portion 12 including a bottom face 12t and a sealing portion 14 continuing from the body portion 12, where the sealing member 30 is attached to the sealing portion 14, a quadrangle having the smallest area surrounding a cross-section of the body portion 12, the cross-section being perpendicular to a direction of the body portion from the bottom face to the sealing portion 14, is a rectangle having long sides and short sides, and the sealing portion 14 has an elliptical shape or an oval shape.

## Description

### TECHNICAL FIELD

The present invention relates to a prismatic battery and a battery pack using the same.

### BACKGROUND ART

A cylindrical battery is a battery where a cylindrical container is used. A prismatic battery is a battery where a prismatic container is used. For example, Patent Literature 1 describes a battery having a metal case with a body portion having a transverse cross-section of a square shape and a head portion having a cross-section of a perfectly-circular shape.

### CITATION LIST

### Patent Literature

Patent Literature 1: JP 2007-115711 A

### SUMMARY OF INVENTION

### Technical Problem

A cylindrical battery and a prismatic battery may be used in the form of battery pack including a plurality of cylindrical batteries or a plurality of prismatic batteries. The dimensions and the shapes required for a battery pack depend on the product in which the battery pack is to be used. For example, in the case of automobile, the dimensions and the shapes of the battery pack vary depending on the vehicle model.

The present disclosure provides a prismatic battery with excellent reliability of the sealing portion while being suitable for increasing the degree of freedom in the dimensional design of the battery pack.

### Solution to Problem

The present disclosure provides a prismatic battery including:
a metal container;
a sealing member including an insulating packing that is in contact with the container; and
an electrode group housed in the container, wherein
the container includes a prismatic body portion including a bottom face, and a sealing portion continuing from the body portion,
the sealing member is attached to the sealing portion,
a quadrangle with the smallest area to surround a cross section of the body portion, the cross section being perpendicular to a height direction of the body portion from the bottom face to the sealing portion, is a rectangle having long sides and short sides, and
the sealing portion has an elliptical shape or an oval shape.

### Advantageous Effects of Invention

The present disclosure can provide a prismatic battery with excellent reliability of the sealing portion while being suitable for increasing the degree of freedom in the dimensional design of the battery pack.

### BRIEF DESCRIPTION OF DRAWING

FIG. 1 is a three-view drawing of a prismatic battery according to an embodiment of the present disclosure.
FIG. 2 is a cross-sectional view of the prismatic battery shown in FIG. 1 taken along a line II-II.
FIG. 3A is a perspective view of an electrode group.
FIG. 3B is a perspective view of an electrode group of a variant example.
FIG. 4A shows shapes of battery packs constructed using a plurality of square-shaped prismatic batteries.
FIG. 4B shows dimensions and shapes of battery packs constructed using a plurality of prismatic batteries of the present embodiment.

### DESCRIPTION OF EMBODIMENTS

### (Findings on which the present disclosure is based)

The present inventor examined batteries that would be advantageous for improvement of the volumetric energy density of battery packs. For example, when a rectangular parallelepiped battery pack is constructed by connecting a plurality of cylindrical batteries in series, in parallel, or in series-parallel, a large amount of dead space is formed between the batteries. Therefore, battery packs using cylindrical batteries are inferior in the volumetric energy density. In contrast, when a rectangular parallelepiped battery pack is constructed by combining a plurality of prismatic batteries, dead spaces between the batteries is unlikely to be formed. Therefore, a battery pack using prismatic batteries is advantageous from the viewpoint of volumetric energy density. For example, if prismatic batteries are used in place of cylindrical batteries, the volumetric energy density of the battery pack can be improved by approximately 25% by simple calculation.

As described in Patent Literature 1, a conventional prismatic battery has a transverse cross-section of a square shape. In this case, the vertical dimension and the horizontal dimension of the battery pack can each only be multiples of the length L of one side of the prismatic battery of a square shape. For example, when six prismatic batteries of a square shape are arranged on a plane to construct a rectangular parallelepiped battery pack, the shape allowed for the battery pack is limited to two types.

The present inventor then attempted to construct a rectangular parallelepiped battery pack by arranging prismatic batteries of a rectangular shape on a plane. In this case, the number of possible shapes for the battery pack is greater than the case of using prismatic batteries of a square shape. For example, when six prismatic batteries of a rectangular shape are arranged on a plane to construct a rectangular parallelepiped battery pack, the shape allowed for the battery pack is four types.

The present inventor noticed that the shape of the sealing portion of the prismatic battery of a rectangular shape requires some improvement. In the case of conventional prismatic batteries, a perfectly-circular sealing portion is formed by drawing, and a sealing member of a perfectly-circular shape is attached to the sealing portion. By making the sealing portion to be perfectly circular, it is possible to prevent the formation of a square-shaped sealing portion that is difficult to seal. On the other hand, in the case of prismatic batteries of a rectangular shape, it is difficult to process the rectangular-shaped container so that the sealing portion has a transverse cross-section of a perfectly-circular shape. In the case where the rectangular container is not processed, as mentioned above, sealing performance of the container corners may become an issue. Under the circumstance, the present inventor arrived at the prismatic battery of the present disclosure.

In the present description, a "rectangle" is regarded as having a pair of long sides and a pair of short sides.

The embodiments of the present disclosure are described below with reference to the attached drawings. The present disclosure is not limited to the following embodiments.

### (Embodiments)

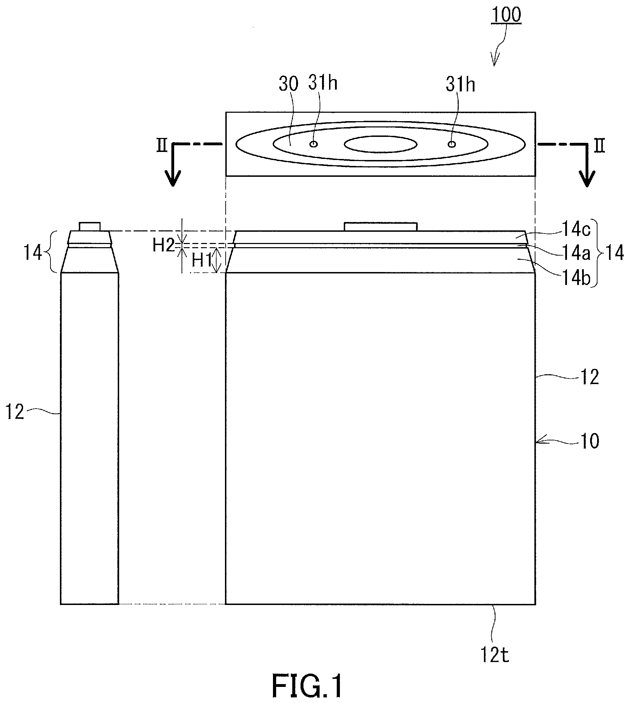

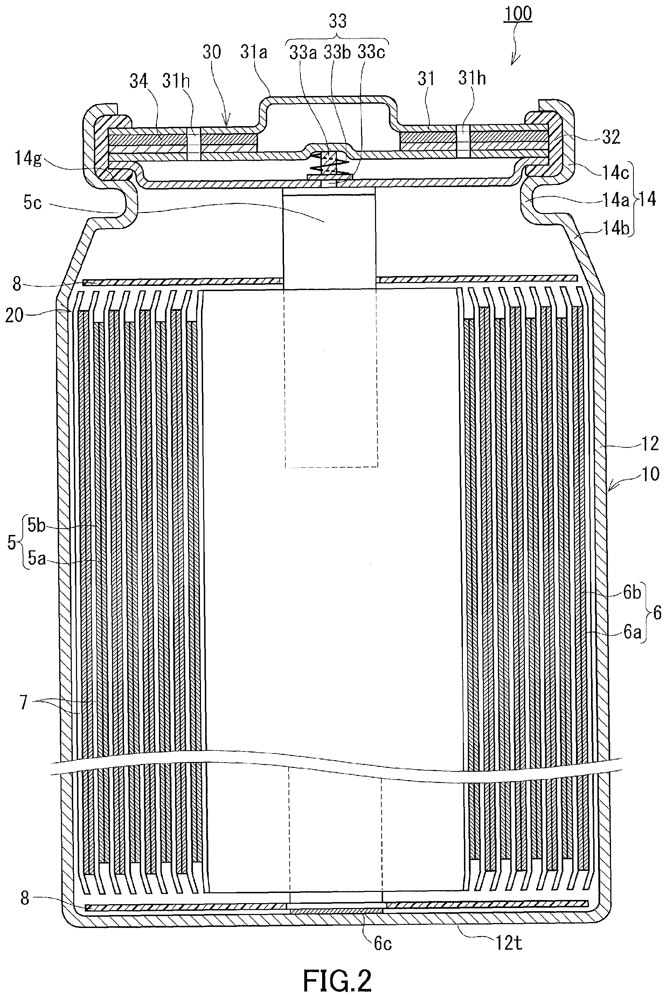

FIG. 1 is a three-view drawing of a prismatic battery according to one embodiment of the present disclosure. FIG. 2 is a cross-sectional view of the prismatic battery shown in FIG. 1 taken along the line II-II. As shown in FIG. 1 and FIG. 2, the prismatic battery 100 includes a container 10 and an electrode group 20. The container 10 is made of a metal. The electrode group 20 is housed in the container 10. The prismatic battery 100 further includes a sealing member 30. The sealing member 30 is attached to the container 10. The container 10 is closed by the sealing member 30.

The container 10 includes a prismatic body portion 12 including a bottom face 12t and a sealing portion 14 continuing from the body portion 12. The body portion 12 is the portion in which the electrode group 20 is housed. The area of the cross-section of the body portion 12 perpendicular to the height direction is constant. The sealing portion 14 is the portion to which the sealing member 30 is attached.

The body portion 12 has a rectangular cross-section. Specifically, a quadrangle with the smallest area surrounding the cross-section of the body portion 12 perpendicular to the height direction is a rectangle. Since the body portion 12 is rectangular, the prismatic battery 100 is suitable for increasing the degree of freedom in the dimensional design of the battery pack.

In the present Description, the "height direction" is a direction parallel to the direction from the bottom face 12t to the sealing portion 14. A cross section perpendicular to the height direction may be referred to as a "transverse cross-section".

The sealing portion 14 has an elliptical shape or an oval shape. Specifically, the sealing portion 14 has a part being in contact with the sealing member 30, and the part has an elliptical shape or an oval shape. The elliptical or oval sealing portion 14 has no corners, which enables the container 10 to be reliably sealed. In other words, the prismatic battery 100 has excellent reliability of the sealing portion 14.

In the present description, an elliptical shape means a shape represented by a closed convex curve that does not self-intersect and has two symmetry axes, including a minor axis and a major axis. In other words, in the present description, a shape that does not strictly satisfy the equation for an ellipse may also be included in the concept of an elliptical shape. An oval shape means a shape represented by two semicircles and a pair of parallel straight lines. An oval shape also has two symmetrical axes.

The long side of the transverse cross-section of the body portion 12 is aligned with the longitudinal direction of the sealing portion 14 in a plan view. The sealing portion 14 having an elliptical shape or an oval shape is consistent with the rectangular body portion 12, and can be formed without difficulty by the process of drawing the container 10. The transverse cross-section of the sealing portion 14 has an area smaller than the area of transverse cross-section of the body portion 12.

In the present embodiment, the sealing portion 14 includes a groove portion 14a, a transition portion 14b, and a head portion 14c. In the height direction, the transition portion 14b, the groove portion 14a, and the head portion 14c are positioned in this order.

The groove portion 14a is a portion that includes a support face 14g projecting into the container 10. The groove portion 14a has an elliptical shape or an oval shape in a plan view. Specifically, the inner edge and the outer edge of the support face 14g have an elliptical shape or an oval shape in a plan view. The elliptical or oval groove portion 14a has no corners, which allows the container 10 to be reliably sealed. The groove portion 14a can be formed, for example, by curling.

The transition portion 14b is a portion located between the body portion 12 and the groove portion 14a. The transition portion 14b is in contact with the body portion 12. The area of the cross-section of the transition portion 14b perpendicular to the height direction gradually decreases from the body portion 12 to the groove portion 14a. At the transition portion 14b, the shape of the transverse cross-section of the sealing portion 14 transitions from a rectangular shape to an elliptical shape or an oval shape. The transition portion 14b can be formed, for example, by drawing. By providing the transition portion 14b, the shape of the container 10 can be gradually changed from the body portion 12 to the groove portion 14a.

The dimension H1 of the transition portion 14b in the height direction is greater than the dimension H2 of the groove portion 14a in the height direction. By keeping the sufficient dimension H1 of the transition portion 14b, a natural and reasonable change in the shape from the body portion 12 to the groove portion 14a is allowed.

The head portion 14c is the part being in a close contact with the sealing member 30. The head portion 14c stands up in the height direction from the groove portion 14a. The tip of the head portion 14c, that is, the open end of the container 10, is curved inward so as to cover the sealing member 30. In the present embodiment, the head portion 14c is crimped to fix the sealing member 30 to the sealing portion 14. This allows the inside and outside of the container 10 to be reliably sealed off. Since the transverse cross-section of the head portion 14c also has an elliptical shape or an oval shape, a gap is unlikely to be formed between the head portion 14c and the sealing member 30. In the present embodiment, a so-called crimp-type sealing structure is employed.

The sealing member 30 is a component attached to the sealing portion 14 of the container 10. The sealing member 30 is supported by the support face 14g of the groove portion 14a. With this configuration, the sealing member 30 is prevented from falling into the inside of the container 10.

In the present embodiment, the sealing member 30 has an elliptical shape or an oval shape. Since both the sealing portion 14 and the sealing member 30 have an elliptical shape or an oval shape, the sealing member 30 can be reliably attached to the sealing portion 14.

The sealing member 30 includes a sealing plate 31, an insulating packing 32, a safety valve 33, and a PTC element 34. The sealing plate 31 includes a convex terminal 31a. The insulating packing 32 is attached to the periphery of the sealing plate 31. The insulating packing 32 is in contact with the support face 14g of the sealing portion 14. The insulating packing 32 has an elliptical shape or an oval shape in a plan view to coincide with the sealing portion 14. This allows the inside and outside of the container 10 to be reliably sealed off.

In the present embodiment, the tip of the head portion 14c, that is, the open end of the sealing portion 14, is curved inward and is in a close contact with the sealing portion 30. With this configuration, detachment of the sealing member 30 from the container 10 can be reliably prevented, and the container 10 can be reliably sealed.

The safety valve 33 is built into the sealing member 30 and the safety valve 33 includes a valve body 33a, a spring 33b, and an exhaust hole 33c. The valve body 33a is pressed against the exhaust hole 33c due to the force applied by the spring 33b. In this manner, the exhaust hole 33c is closed. When the internal pressure of the container 10 increases, the valve body 33a is pushed up, and the exhaust hole 33c communicates with the outside of the battery 100 through the exhaust holes 31h. The PTC element 34 is disposed on the current path between the electrode group 20 and the terminal 31a. As the temperature of the PTC element 34 increases, the resistance value thereof increases. When the temperature of the PTC element 34 reaches a predetermined temperature, the resistance of the PTC element 34 increases rapidly to cut off the current.

As shown in FIG. 1, the sealing plate 31 is provided with at least one exhaust hole 31h. In an emergency, the inside of the container 10 communicates with the outside through the safety valve 33 and the exhaust hole 31h. In the present embodiment, two exhaust holes 31h are formed along the longitudinal direction of the sealing plate 31.

The electrode group 20 includes a positive electrode 5, a negative electrode 6, and a pair of separators 7. The electrode group 20 is impregnated with an electrolyte solution. The opening portion of the container 10 is closed with the sealing member 30. The positive electrode 5 includes a positive electrode current collector 5a and a positive electrode active material layer 5b. One end of the positive electrode lead 5c is connected to the positive electrode 5. The other end of the positive electrode lead 5c is connected to the back face of the sealing member 30. The negative electrode 6 includes a negative electrode current collector 6a and a negative electrode active material layer 6b. One end of the negative electrode lead 6c is connected to the negative electrode 6. The other end of the negative electrode lead 6c is connected to the bottom face of the container 10. The top face and the bottom face of the electrode group 20 each includes an insulating plate 8 arranged thereon.

The positive electrode lead 5c of the electrode group 20 is electrically connected to the sealing member 30. The width direction of the positive electrode lead 5c is along the longitudinal direction of the elliptical or oval sealing portion 14. With this configuration, it is possible to increase the degree of freedom in the width of the positive electrode lead 5c compared to the case where the sealing portion has a perfectly-circular shape. In other words, when the positive electrode lead 5c is connected along the longitudinal direction of the sealing portion 14, it is possible to electrically connect a wider positive electrode lead 5c to the sealing member 30 compared to the case where the positive electrode lead 5c is connected along the short-side direction of the sealing portion 14. Use of a wider positive electrode lead 5c makes it possible to pass a larger current.

A sealing portion of a conventional battery is perfectly circular. Since an excessively wide lead would make it difficult to weld the lead to the sealing member, increasing the width of the lead is difficult, and the current to flow through the lead is also limited. The prismatic battery 100 of the present embodiment can solve such problems.

Instead of the positive electrode lead 5c, the negative electrode lead 6c may be connected to the sealing member 30. In this case, instead of the negative electrode lead 6c, the positive electrode lead 5c may be connected to the bottom face of the container 10. That is, the positions of the positive electrode 5 and the negative electrode 6 in the electrode group 20 may be interchanged.

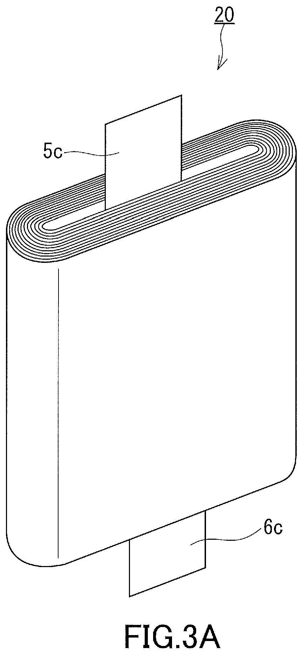

FIG. 3A is a perspective view of the electrode group 20. As shown in FIG. 3A, the electrode group 20 has an oval wound structure. Specifically, the transverse cross-section of the electrode group 20 has an oval shape. With this configuration, the volume of the space inside the container 10 can be reduced, and thus, the volumetric energy density of the prismatic battery 100 can be increased.

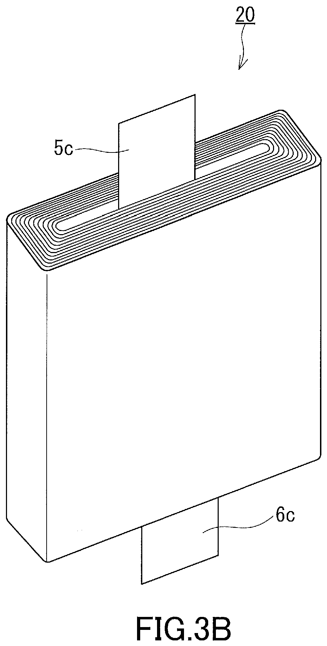

FIG. 3B is a perspective view of an electrode group 20a of a variant example. The electrode group 20a has a rectangular wound structure. Specifically, the electrode group 20a has a transverse cross-section of a rectangular shape. With this configuration, the internal space of the container 10 can be further reduced. The term "transverse cross-section being rectangular" means a shape having a pair of parallel short sides and a pair of parallel long sides. The corners of the electrode group 20a are rounded.

For the same reason, the electrode group 20 may have an elliptical wound structure. That is, the transverse-cross section of the electrode group 20 may have an elliptical shape.

The electrode group 20 may not have a wound structure. For example, the electrode group 20 may be a laminate-type electrode group. A laminate-type electrode group is an electrode group obtained by laminating plate-shaped structural units including a positive electrode, a separator, and a negative electrode. In the case of a laminate-type electrode group, a positive electrode lead is attached to each of the positive electrodes, and a negative electrode lead is attached to each of the negative electrodes. The positive electrode leads are bundled at the base, and the bundled positive electrode leads are welded to the sealing member 14 or the container 20.

Similarly, the negative electrode leads are bundled at the base, and the bundled negative electrode leads are welded to the sealing member 14 or the container 20.

The material of the container 10 is not particularly limited as long as it is a metal. For example, when the container 10 has the same polarity as the negative electrode 6 of the electrode group 20, the container 10 can be made of a steel plate with a Ni-containing layer on its surface. The container 10 may be made of so-called nickel-plated steel plate. For example, when the container 10 has the same polarity as the positive electrode 5 of the electrode group 20, the container 10 may be made of aluminum or an aluminum alloy. Since these materials have excellent workability, they are suitable for the materials of the container 10 of the present embodiment.

The battery 100 is, for example, a lithium secondary battery. In this case, an electrolyte solution is placed in the container 10 together with the electrode group 20. The kind of prismatic battery 100 is not particularly limited. The prismatic battery 100 may be another kind of battery, such as a nickel-metal hydride battery.

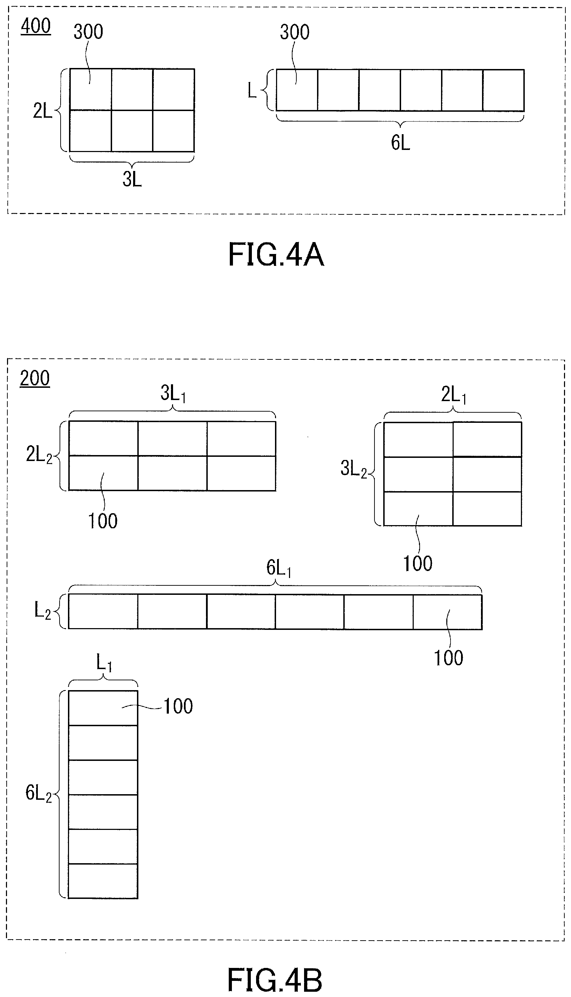

FIG. 4A shows dimensions and shapes of battery packs constructed using a plurality of square-shaped prismatic batteries. As shown in FIG. 4A, for example, a rectangular parallelepiped battery pack 400 is constructed by arranging six square-shaped prismatic batteries 300 with a side length of L, on a plane. In this case, the shape allowed for the battery pack 400 is limited to two types. One of the two battery packs 400 has dimensions of 2L × 3L. The other of the two battery packs 400 has dimensions of L × 6L.

FIG. 4B shows dimensions and shapes of battery packs constructed using the plurality of prismatic batteries 100 of the present embodiment. As shown in FIG. 4B, for example, six prismatic batteries 100 of a rectangular shape are arranged on a plane to construct a rectangular parallelepiped battery pack 200. In this case, the shape allowed for the battery pack 200 is four types. It is assumed that the prismatic battery 100 has long sides with a length L₁ and short sides with a length L₂. The four battery packs 200 each have dimensions of 3L₁ × 2L₂, 2L₁ × 3L₂, 6L₁ × L₂, and L₁ × 6L₂. As described above, the prismatic battery 100 of the present embodiment is suitable for increasing the degree of freedom in the dimensional design of the battery pack 200. The prismatic battery 100 can be used in battery packs 200 of various shapes, and is therefore highly versatile.

Use of a plurality of prismatic batteries 100 serve to remarkably reduce the dead space of the battery pack 200. In other words, a battery pack 200 with a high volumetric energy density can be obtained.

### (Other embodiments)

### (Addendum)

The above-mentioned embodiments disclose the following technologies.

### (Technique 1)

A prismatic battery including:
a metal container;
a sealing member including an insulating packing that is in contact with the container; and
an electrode group housed in the container, wherein
the container includes a prismatic body portion including a bottom face, and a sealing portion continuing from the body portion,
the sealing member is attached to the sealing portion,
a quadrangle having the smallest area surrounding a cross section of the body portion, the cross section being perpendicular to a height direction of the body portion from the bottom face to the sealing portion, is a rectangle having long sides and short sides, and
the sealing portion has an elliptical shape or an oval shape.

With this configuration, it is possible to provide a prismatic battery suitable for increasing the degree of freedom in the dimensional design of a battery pack while also having excellent reliability of the sealing portion.

### (Technique 2)

The prismatic battery according to Technique 1, wherein the sealing portion includes a groove portion with a support face projecting into the container, and the groove portion has an elliptical shape or an oval shape in a plan view. The elliptical or oval groove portion has no corners, which allows the container to be reliably sealed.

### (Technique 3)

The prismatic battery according to Technique 2, wherein the sealing portion includes a transition portion located between the body portion and the groove portion, and the transition portion has a cross section perpendicular to the height direction, the cross section has an area gradually decreasing from the body portion to the groove portion. By providing the transition portion, the shape of the container from the body portion to the groove portion can be gradually changed.

### (Technique 4)

The prismatic battery according to Technique 2 or 3, wherein the sealing member is supported by the support face. With this configuration, the sealing member is prevented from falling into the container.

### (Technique 5)

The prismatic battery according to any one of Techniques 1 to 3, wherein a lead of the electrode group is electrically connected to the sealing member, and a width direction of the lead is along a longitudinal direction of the sealing portion. With this configuration, it is possible to increase the width of the leads, and thus, it is possible to flow a larger current through the leads.

### (Technique 6)

The prismatic battery according to any one of Techniques 1 to 3, wherein the sealing portion includes an open end that is curved inward and in close contact with the sealing member. With this configuration, detachment of the sealing member from the container can be reliably prevented, and the container can be reliably sealed.

### (Technique 7)

The prismatic battery according to any one of Techniques 1 to 6, wherein the sealing member has an elliptical shape or an oval shape. Since both the sealing portion and the sealing member have an elliptical shape or an oval shape, the sealing member can be reliably attached to the sealing portion.

### (Technique 8)

The prismatic battery according to any one of Techniques 1 to 7, wherein the electrode group has a wound structure of an elliptical shape, an oval shape, or a rectangular shape. With this configuration, it is possible to reduce the internal space of the container, thereby improving the volumetric energy density of the battery.

### (Technique 9)

The prismatic battery according to any one of Techniques 1 to 8, wherein the container is made of a steel plate with a Ni-containing layer on a surface and has a polarity identical to a polarity of a negative electrode of the electrode group. A steel plate with a Ni-containing layer on its surface is excellent in workability, and suitable for the material of the container of the present disclosure.

### (Technique 10)

The prismatic battery according to any one of Techniques 1 to 8, wherein the container is made of Al or an Al alloy and has a polarity identical to a polarity of a positive electrode of the electrode group. Al or Al alloy is excellent in workability, and suitable for the material of the container of the present disclosure.

### (Technique 11)

A battery pack including a plurality of the prismatic batteries according to any one of Techniques 1 to 10. According to the present disclosure, a battery pack with a high volumetric energy density can be obtained.

### INDUSTRIAL APPLICABILITY

The prismatic battery of the present disclosure is suitable for use in a battery pack.

## Claims

1. A prismatic battery comprising:
a metal container;
a sealing member comprising an insulating packing in contact with the container; and
an electrode group housed in the container, wherein
the container comprises a prismatic body portion comprising a bottom face, and a sealing portion continuing from the body portion,
the sealing member is attached to the sealing portion,
a quadrangle having the smallest area and surrounding a cross section of the body portion, the cross section being perpendicular to a height direction of the body portion from the bottom face to the sealing portion, is a rectangle having long sides and short sides, and
the sealing portion has an elliptical shape or an oval shape.

2. The prismatic battery according to claim 1, wherein
the sealing portion comprises a groove portion with a support face projecting into the container, and
the groove portion has an elliptical shape or an oval shape in a plan view.

3. The prismatic battery according to claim 2, wherein
the sealing portion comprises a transition portion located between the body portion and the groove portion, and
the transition portion has a cross section perpendicular to the height direction, the cross section has an area gradually decreasing from the body portion to the groove portion.

4. The prismatic battery according to claim 2, wherein
the sealing member is supported by the support face.

5. The prismatic battery according to claim 1, wherein
a lead of the electrode group is electrically connected to the sealing member, and
a width direction of the lead is along a longitudinal direction of the sealing portion.

6. The prismatic battery according to claim 1, wherein
the sealing portion comprises an open end curved inward and in close contact with the sealing member.

7. The prismatic battery according to claim 1, wherein
the sealing member has an elliptical shape or an oval shape.

8. The prismatic battery according to claim 1, wherein
the electrode group has a wound structure of an elliptical shape, an oval shape, or a rectangular shape.

9. The prismatic battery according to claim 1, wherein
the container is made of a steel plate with a Ni-containing layer on a surface and has a polarity identical to a polarity of a negative electrode of the electrode group.

10. The prismatic battery according to claim 1, wherein
the container is made of Al or an Al alloy and has a polarity identical to a polarity of a positive electrode of the electrode group.

11. A battery pack comprising a plurality of the prismatic batteries according to claim 1.
